# EUROPÄISCHE PATENTSCHRIFT

(11) **EP 3 175 058 B1**
(45) Veröffentlichungstag und Bekanntmachung des Hinweises auf die Patenterteilung: **05.10.2022**
(21) Anmeldenummer: 15759623.0
(22) Anmeldetag: 28.07.2015
(51) Int. Cl.: E04C 3/26, E04C 5/07, E04C 5/08

(54) **VERFAHREN ZUM HERSTELLEN EINES DURCH EINE BEWEHRUNG VORGESPANNTEN BETONWERKSTÜCKS UND DURCH EINE BEWEHRUNG VORGESPANNTES BETONWERKSTÜCK**
METHOD FOR PRODUCING A CONCRETE WORKPIECE PRESTRESSED BY A REINFORCEMENT, AND CONCRETE WORKPIECE PRESTRESSED BY A REINFORCEMENT
PROCÉDÉ DE FABRICATION D'UNE PIÈCE DE BÉTON PRÉCONTRAINT ET PIÈCE DE BÉTON PRÉCONTRAINTE PAR UNE ARMATURE

(30) Priorität: 28.07.2014 CH 11542014
(43) Veröffentlichungstag der Anmeldung: 07.06.2017
(73) Patentinhaber: Synrocks SA, 6710 Lugano (CH)
(72) Erfinder: MARTINOLA, Giovanni, CH-8107 Buchs (CH); PEDRETTI-RODI, Andrea, 6900 Bellinzona (CH)
(74) Vertreter: Stump, Beat
(86) Internationale Anmeldenummer: PCT/CH2015/000112
(87) Internationale Veröffentlichungsnummer: WO 2016/015166

(56) Entgegenhaltungen:
- EP-A2- 0 197 236
- DE-A1- 4 428 987
- FR-A1- 2 505 022
- GB-A- 1 326 943
- GB-A- 2 358 880
- JP-A- 2004 092 333
- US-A- 3 790 394

## Beschreibung

Die vorliegende Erfindung betrifft ein Verfahren zum Herstellen eines durch eine Bewehrung vorgespannten Betonwerkstücks nach dem Oberbegriff von Anspruch 1.

Die mangelnde Zugbelastbarkeit von Beton wird häufig durch eine vorgespannte Bewehrung verbessert, wobei trotz der Vielfalt der möglichen Vorspannungen die Herstellung eines vorgespannten Betonwerkstücks aufwendig ist, da beispielsweise mit einem Spannbett oder mit am Werkstück anzuordnenden, nach der Hydratisierung des Betons zu aktivierenden Zugankern gearbeitet werden muss. Dies hat auch zur Folge, dass vorgespannte Betonwerkstücke nicht mit der häufig wünschbar schlanken oder auch komplizierten geometrischen Ausgestaltung hergestellt werden können, die an sich durch das Vergiessen des Frischbetons in eine entsprechende Form denkbar wäre.

Im Bereich des Ultrahochleistungsfaserbetons (UHCP, "Ultra High Performance Concrete") ist zwar neben der Druckfestigkeit auch die Zugfestigkeit erhöht worden, s. beispielsweise die Publikation "Eigenschaften von wärmebehandeltem ultra-hochfestem Beton (UHCP)" von Hans Carsten Kühne, Bundesanstalt für Materialforschung und Prüfung, oder auch die Publikation "Meccanical properties of reactive powder concerte containing mineral admixtures under different curing regimes", Halit Yazici, Mert Yardimci, Serdar Aydin und Anil Karabulut, Construction and Builidng Materials, 23 (2009) Seite 1223 - 1231. Durch eine Wärmebehandlung der UHCP - Proben wurden gemäss diesen Publikationen Druckfestigkeiten im Bereich von 200 MPa erreicht, während die (zentrische) Zugfestigkeit aber nicht über die an sich im Bereich des Betons respektablen 20 MPa gesteigert werden konnte. Solche Werte für die Zugfestigkeit von Beton sind aber immer noch weit von der Zugfestigkeit von etwa Metallen entfernt, so dass der Anwendungsbereich auch von UHCP Werkstücken diesbezüglich äusserst limitiert ist und auch bleibt, was insbesondere im Hinblick auf die geringeren Kosten von Beton gegenüber z.B. Metall bedauerlich ist.

Die US 3 790 394 offenbart ein vorgespanntes, ausgehärtetes Werkstück, in welchem dessen Vorspannung durch eine Wärmebehandlung bis etwa 80 ⁰C erzeugt wird, wobei der Wärmeausdehnungskoeffizient der Bewehrung höher ist als derjenige des aushärtenden Bindemittels.

Die JP 2004 092333 A offenbart ein Verfahren zum Herstellen eines vorgespannten Betonwerkstücks, welches eine Vorspannung durch eine Bewehrung erlaubt, jedoch eine aufwendige Vorrichtung zur gleichzeitigen Erwärmung/Kühlung voraussetzt und insbesondere durch die zahlreichen wärmenden/kühlenden Leitungen im Frischbeton dessen gleichmäßige Aushärtung und damit dessen Qualität erheblich stört. Entsprechend ist es die Aufgabe der vorliegenden Erfindung, Betonwerkstücke bereit zu stellen, die eine hohe Zugfestigkeit, insbesondere Biegezugfestigkeit aufweisen und bei Bedarf auch schlank oder mit komplizierter geometrischer Form ausgebildet werden können.

Diese Aufgabe wird gelöst durch ein Verfahren nach Anspruch 1.

Dadurch, dass der Verbund aus Frischbeton mit seiner Bewehrung aus einer erhöhten Temperatur abgekühlt wird, unterliegen sowohl der Beton als auch die Bewehrung einer thermischen Dehnung (die hier im Fall der Abkühlung eine Schrumpfung ist), wobei der Beton jedoch weniger schrumpft als die Bewehrung, da dessen Temperaturausdehnungskoeffizient α_{T} kleiner ist.

Da der Beton und Bewehrung an einander haften, ist die Bewehrung während der Abkühlung gehindert, frei und damit mehr zu schrumpfen als der Beton (was sie dank ihres grösseren Temperaturdehnungskoeffiezienten α_{T} an sich sollte), und wird dadurch durch diesen entsprechend gestreckt, mit der Folge, dass die Bewehrung auf den Beton wiederum einen ihrer Streckung entsprechenden Druck ausübt, diesen also vorspannt. Dazu muss der Beton jeweils natürlich wenigstens soweit hydratisiert, d.h. wenigstens soweit gehärtet sein, dass er den durch die aktuelle Streckung erzeugten Druck aufnehmen kann, wenigstens soweit, dass eine Dehnung der Bewehrung zurückbleibt.

Somit ergibt sich eine Vorspannung des Betons mit den bekannten Vorteilen eines vorgespannten Betonwerkstücks im Hinblick auf die Zug- oder Biegezugbelastbarkeit, ohne dass ein Spannbett oder verstellbare Zuganker für die Vorspannung der Bewehrung notwendig sind.

Im Ergebnis kann eine beliebig ausgebildete Bewehrung einfach in eine mit Frischbeton vergossene Form eingelegt und die erfindungsgemässe Wärmebehandlung durchgeführt werden. Dies erlaubt, das Betonwerkstück ohne durch die konventionellen Vorspannmittel bzw. Vorspanntechniken bedingten Restriktionen der vorgesehenen Belastung entsprechend zu entwerfen, insbesondere im Hinblick auf den gewünschten Verlauf und die gewünschte Dimensionierung der Vorspannelemente und auch auf die äussere geometrische Form des Betonwerkstücks selbst.

Erfindungsgemäss können damit vorgespannte Betonwerkstücke hergestellt werden, die nach dem Stand der Technik nur mit grossem Aufwand oder gar nicht herstellbar sind.

Bevorzugte Ausführungsformen des erfindungsgemässen Verfahrens weisen die Merkmale der abhängigen Ansprüche auf.

Die Erfindung wird nachstehend anhand der Figuren noch etwas näher beschrieben.
- Figur 1: ein Spannungs - Dehnungsdiagramm von Faserbeton gemäss dem Stand der Technik,
- Figur 2: ein Diagramm mit einem einfachen Temperaturprofil
- Figur 3: ein Diagramm mit einem Temperaturprofil zur Ausführung einer Ausführungsform des erfindungsgemässen Verfahrens,
- Figur 4: ein Spannungs - Dehnungsdiagramm für den Biegezugversuch von drei konventionellen und drei erfindungsgemässen Versuchskörpern,
- Figur 5: ein Beispiel eines erfindungsgemässen, vorgespannten Betonträgers, und
- Figur 6a bis 6c: drei weitere Beispiele für erfindungsgemässe Betonwerkstücke.

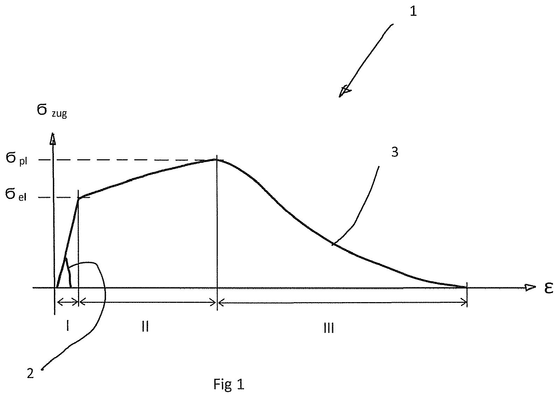

Figur 1 zeigt ein Spannungs - Dehnungsdiagramm 1, wobei die Zugspannung 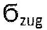 auf der vertikalen Achse und die resultierende Dehnung ε auf der horizontalen Achse abgetragen ist.

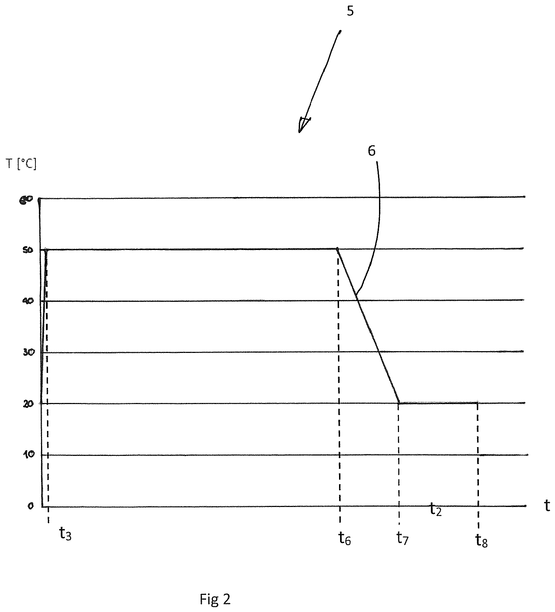

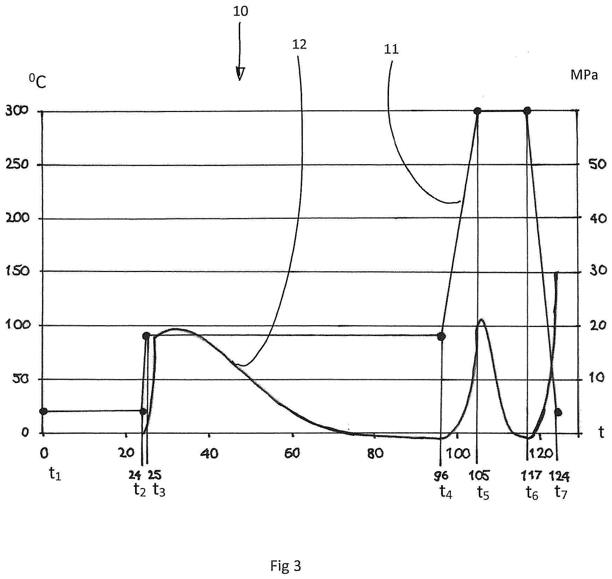

Dabei zeigt die Kurve 2 das Verhalten von einfachem Beton (Beispielsweise einem Beton gemäss der Beschreibung von Figur 2) und die Kurve 3 das Verhalten eines UHCP Betons, der faserverstärkt ist, etwa einem Beton gemäss der Beschreibung zu Figur 3. Generell ist ersichtlich, dass die Zugfestigkeit des gewöhnlichen Betons an diese des faserverstärkten Betons auch nicht annähernd heranreicht - wobei die viel bessere Zugfestigkeit des faserverstärkten Betons je nach der konkreten Betonmischung und den verwendeten Fasern bis in den Bereich gegen 20 MPa reicht, was allerdings im Vergleich zu anderen Werkstoffen, wie Metall immer noch wenig ist. Der Begriff "Fasern" in einem Faserbeton bezieht sich im Allgemeinen auf nicht metallische oder metallische Fasern mit einer Länge von bis um die 60 mm und einem Durchmesser von bis ca. 1,0 mm. Die Fasern stellen eine Bewehrung des Betons dar, besitzen eine gleichförmige Oberfläche und unterscheiden sich in ihren Abmessungen deutlich von Bewehrungen mit grösseren Abmessungen, die nicht mehr in den Beton bei der Herstellung des Frischbetons mit dessen Komponenten eingemischt und damit möglichst gleichmässig im Beton verteilt werden können und zudem in der Regel auch eine nicht gleichförmige Oberfläche mit Erhebungen etc. besitzen. Für die Beschreibung der vorliegenden Erfindung wird deshalb von Fasern ausgegangen, soweit diese noch in den Frischbeton durch das Einmischen betreffend ihrer Anordnung und ihrer Ausrichtung homogen verteilt werden können, was in der Regel bei den oben genannten Abmessungen eine Grenze findet. Andere Bewehrungen sind dann nicht mehr Fasern.

Wird auf einen UHCP Beton eine Spannung aufgebracht, verformt er sich in einer ersten Stufe (Dehnungsstufe I) zuerst elastisch, ohne Rissbildung, bis die Zugspannung 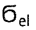 erreicht ist, dann in der Stufe II durch die Ausbildung von Mikrorissen plastisch bis zur Zugspannung 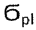 . In der Stufe II wird die Ausbreitung der Mikrorisse durch die Fasern verhindert, was eine fortlaufende Erhöhung der Zugspannung 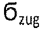 ermöglicht. In Stufe III schliesslich wird der Beton durch die fortschreitende Rissbildung zerstört, die Festigkeit bricht zusammen (Entfestigung).

Nachfolgend wird zur Darstellung der Erfindung nicht die (zentrische) Zugfestigkeit, sondern die Biegezugfestigkeit verwendet, welche insbesondere bei Baustoffen verwendet wird und das Verhalten eines Probekörpers unter dem vielleicht häufigsten Belastungsfall, der Biegung, beschreibt.

Figur 2 zeigt ein Temperatur - Zeitdiagramm 5 für die Wärmebehandlung zur Herstellung eines vorgespannten Betonwerkstücks, das beispielsweise eine übliche Bewehrung von Rippen aufweisenden Stahlstäben wie Stahl S500 mit einem Durchmesser von 6 mm oder mehr mit einem Wärmedehnungskoeffizienten α_{T} im Bereich von 12 × 10 ⁻⁶ °/K aufweist. Die vertikale Achse zeigt die Temperatur in °C, die horizontale Achse die vergangene Zeit t in Stunden h.

Der Beton ist für die in der Figur beschriebene Wärmebehandlung beispielsweise wie folgt zusammengesetzt:

| Bestandteile | Gehalt [kg/m³] |
|---|---|
| Zement (CEM I 52.5), e.g. Holcim | 300 |
| Gebrochener Basalt- Sand 0-4 mm | 900 |
| Basalt 4-8 mm | 390 |
| Zuschlag 8-16 mm | 825 |
| Superverflüssiger polycarboxylate - ether | 3 |
| Wasser | 120 |
| Wärmeausdehnungskoeffizient α_{T} | ca. 10 × 10 ^{-6 0}/K |

Gemäss der Temperaturkurve 6 wird das zur Zeit Zeit t₁ frisch vergossene Betonwerkstück, das die Bewehrung enthält, sofort mit 0,4 ⁰C/min auf 50 ⁰C erwärmt, die es zur Zeit t₅ erreicht, danach bis zur Zeit t₆ 24 Stunden auf 50 °C gehalten und anschliessend mit ca. 0,2 ⁰C/min abgekühlt, wobei es zur Zeit t₇ wieder Raumtemperatur erreicht und schliesslich noch während ca. 6 Stunden bis zur Zeit t₈ aushärtet.

In einer weiteren Ausführungsform kann das frisch vergossene Betonwerkstück vor der Erwärmung auf die erhöhte Temperatur für eine erste Formfestigkeit teilweise hydratisiert, bis der Beton bevorzugt eine Druckfestigkeit zwischen 20 MPa und 60 MPa aufweist, wobei besonders bevorzugt diese teilweise Hydratisierung bei Umgebungstemperatur erfolgt. Der Fachmann kann im konkreten Fall die bestmöglichen Bedingungen für diese erste Teilhydratisierung festlegen.

Wesentlich ist dabei, dass der Beton während der Erwärmung noch genügend verformbar ist, dass zwischen ihm und der Bewehrung eine Relativverschiebung möglich ist, die erlaubt, dass sich die Bewehrung dank ihres grösseren Temperaturkoeffizienten gegenüber dem Beton dehnt. Dann wird der Beton in diesem Zustand soweit hydratisiert, dass er während der Abkühlung (t₆ bis t₇) keine Relativverschiebung mehr möglich ist, d.h. der Beton bei der nachfolgenden Abkühlung bis zur Zeit t₇ Druck durch die gestreckte Bewehrung aufnehmen kann und diesem Druck entsprechend vorgespannt ist.

Die Zeiten t₁ bis t₈ werden in der vorliegenden Beschreibung einheitlich für dieselben Verfahrensschritte verwendet, so dass im Diagramm 5 von Figur 2 mit einer einfachen Ausführungsform der vorliegenden Erfindung beispielsweise die Zeiten t₂ bis t₄ für weitere, bevorzugte aber nicht zwingende Verfahrensschritte gemäss anderen Ausführungsformen fehlen.

Es ergibt sich, dass für die Wärmebehandlung der Beton und die Bewehrung derart ausgewählt werden, dass bei einer Abkühlung des Betonwerkstücks aus einer erhöhten Temperatur der Wärmeausdehnungskoeffizient α_{T} des Betons kleiner ist als derjenige der Bewehrung, s. die oben angegebenen Wärmedehnungskoeffizienten α_{T} des Betons und des Bewehrungsstahls.

Die Auswahl erfolgt weiter so, dass während der Abkühlung der Beton und die Bewehrung genügend stark aneinander haften, wenn der Beton während der Abkühlung wenigstens soweit hydratisiert ist, um die Bewehrung auf Grund der unterschiedlichen Wärmedehnungskoeffizienten dehnen zu können. Dies ist hier beispielsweise der Fall durch die Wahl von Rippen aufweisendem Stahl S500, der als Bewehrung für Beton an sich bekannt ist. Die Rippen bilden mit dem Beton einen Formschluss aus, der zur geforderten Haftung führt, wenn genügende Hydratisation vorliegt. Dies wiederum ist der Fall, wenn der Beton genügend lange auf der erhöhten Temperatur (Zeitintervall t₅ bis t₆) gehalten wird, dessen Dauer der Fachmann aufgrund der Auslegung des Betonwerkstücks und der verwendeten Materialien im konkreten Fall leicht bestimmen kann.

Da die Vorspannung während der ganzen Abkühlung zwischen t₆ und t₇ ansteigt, sollte der Hydratationsgrad laufend wenigstens soweit fortgeschritten sein, um die der aktuellen Temperatur entsprechende Vorspannung tragen zu können. Wenn nicht, kann der Beton beschädigt werden, wobei aber dennoch eine Vorspannung erfindungsgemäss realisierbar ist. Es ist also grundsätzlich nicht zwingend, die vollständige, sich aus der Temperaturdifferenz t₇ - t₆ ergebende Vorspannung zu realisieren.

Damit ergibt sich schliesslich, dass nach der oben beschriebenen Auswahl von Beton und Bewehrung der Beton mit der Bewehrung derart auf die erhöhte Temperatur gebracht und während der Abkühlung wenigstens soweit hydratisiert wird, dass er nach der Abkühlung durch die Bewehrung vorgespannt ist. Insbesondere ist bei dieser einfachen Ausführungsform relevant, dass eine gewisse Relativverschiebung zwischen dem Beton und der Bewehrung bei der Erwärmung auf die erhöhte Temperatur möglich ist, also die Hydratisierung bis t₅ noch nicht zu weit fortgeschritten ist (alternativ kann beispielsweise auch ein Wärmebehandlungsschritt auf eine Vortemperatur vorgesehen werden, s. die Beschreibung zu Figur 3). Auch ist zu vermeiden, dass während der Erwärmung die sich stärker dehnende Bewehrung im Beton bereits Risse verursacht, welche irreparabel sind. Schliesslich kann das Betonwerkstück auf der erhöhten Temperatur gehalten werden, um beispielsweise durch Kriechen den Abbau von Spannungsfeldern zu ermöglichen.

Zusammenfassend weist bei einer Ausführungsform des erfindungsgemässen Verfahrens der Frischbeton für die Erwärmung auf die erhöhte Temperatur und für die Abkühlung aus dieser denselben Wärmeausdehnungskoeffizienten auf, wobei die Hydratisation des Betons für die Erwärmung tief genug gehalten wird, um eine Relativverschiebung zwischen dem Beton und der Bewehrung zu erlauben, und wobei die Abkühlung mit einer Hydratisierung erfolgt, welche eine solche Relativverschiebung nicht mehr zulässt, derart, dass der Beton durch die Abkühlung vorgespannt wird.

Damit muss nach der Abkühlung die Hydratisation nicht vollständig sein, insbesondere, wenn die erhöhte Temperatur der geringen angestrebten Vorspannung wegen (oder aus anderen Gründen) nicht hoch ist - und erfolgt beim Beispiel von Figur 2 gemäss der Temperaturkurve 6 nach der vollendeten Abkühlung bei Raumtemperatur im Zeitintervall t₇ bis t₈ über eine weitere Zeit.

Wie erwähnt ist bei der Ausführungsform gemäss Figur 2 die Oberfläche der Bewehrung geometrisch derart ausgebildet, dass mit dem umgebenden, wenigstens teilweise hydratisierten Beton in Richtung der Vorspannung ein Formschluss entsteht. Hier sei angemerkt (s. dazu weiter unten), dass die Bewehrung auch über einen Kraftschluss oder Stoffschluss bzw. an einer Kombination zwischen Form- Kraft oder Stoffschluss am Beton haften kann. Ebenso ist es möglich, eine nichtmetallische Bewehrung vorzusehen, insbesondere wenn die erhöhte Temperatur auf einem für nicht metallische Werkstoffe noch verträglichen Niveau liegt.

Figur 3 zeigt eine Ausführungsform des erfindungsgemässen Verfahrens. Ersichtlich ist das Temperatur - Zeitdiagramm 10 mit einer Temperaturkurve 11 zur Herstellung eines erfindungsgemässen vorgespannten Betonwerkstücks, das auch hier eine übliche Bewehrung aus Rippen aufweisenden Stahlstäben wie Stahl S500 oder auch Stahl B450C mit einem Durchmesser von 8 mm oder mehr mit einem Wärmedehnungskoeffizienten α_{T} im Bereich von 12 × 10 ^{-6 0}/K aufweist. Die vertikale Achse zeigt links die Temperatur in °C, rechts die im Betonwerkstück herrschende Vorspannung in MPa, die horizontale Achse die vergangene Zeit t in Stunden h.

Verwendet wird beispielsweise ein faserverstärkter, quarzbasierter Beton wie folgt:

| Bestandteile | Gehalt [kg/m³] |
|---|---|
| Zemet CEM I 52.5 R | 1200 |
| Micro silica beispielsweise Elkem MS 971U | 180 |
| Quartzmehl 0-100 µm | 180 |
| Sphärischer Qiartzsand 0.3-0.9 mm | 415 |
| Hochfeste Stahldratfasern, Ø: 0.14 mm Länge: 6 mm | 400 |
| Superverflüssiger (Polycarboxylat - ether) | 46 |
| Wasser | 190 |

In Phase 0 (von t₁ bis t₂) wird das frisch vergossene Betonwerkstück bei Raumtemperatur teilhydratisiert, hier während 24 Stunden, wonach es entformt wird. Der Wärmedehnungskoeffizient α_{T} des Betons ist grösser als derjenige der Bewehrung. Es ist noch keine Vorspannung im Betonwerkstück vorhanden.

In Phase 1 (von t₂ bis t₃) wird das frisch vergossene Betonwerkstück auf eine Vortemperatur von hier 90 ⁰C erwärmt, vorzugsweise mit 1 °C/min.

Der Beton dehnt sich auf Grund der Erwärmung stärker als die Bewehrung und ist bereits hart genug, um diese zu dehnen, so dass sich bereits eine erste Vorspannung im Beton ergibt. Dies ist gezeigt durch die Kurve 12 für die Vorspannung, welche die Bewehrung auf den Beton ausübt.

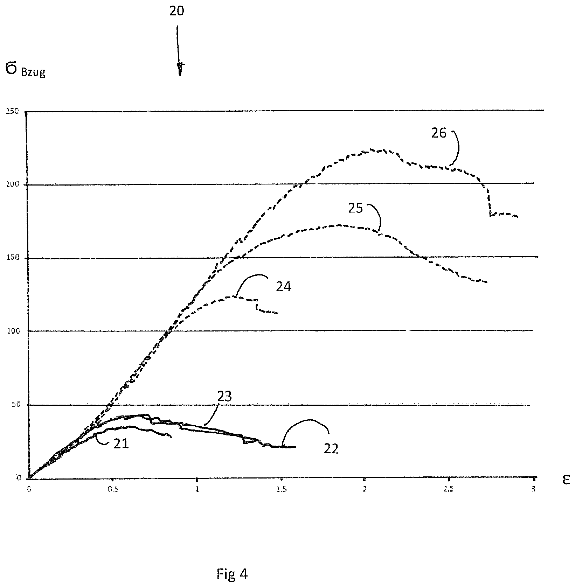

Natürlich ist die Vorspannung abhängig vom konkreten Betonwerkstück, da sie vom Verhältnis der wirksamen Querschnitte des Betonkörpers und der Bewehrung abhängt - derselbe Betonkörper, unterworfen derselben Wärmebehandlung, würde also beispielsweise einer grösseren Vorspannung unterliegen, wenn die wirksame Querschnittsfläche der Bewehrung vergrössert wäre. Die hier beispielhaft eingetragene Vorspannungskurve 11 gehört zu einem Probekörper, wie er in Zusammenhang mit Figur 4, Kurve 26, beschrieben ist. Der Fachmann kann also die Vorspannung bei gleicher Wärmebehandlung durch die Gestaltung der Bewehrung beeinflussen.

In Phase 2 (von t₃ bis t₄) wird das Betonwerkstück auf der Vortemperatur weiter teilhydratisiert, hier während ca. 72 Stunden. Neben der fortschreitenden Hydratisation findet auch eine erste Gefügeumwandlung im Beton statt, er schwindet. Dadurch nimmt die Vorspannung wieder ab. Die Schwindung ist jedoch nicht so gross, dass sich durch die Bewehrung ein übermässiger Zug im Beton ergeben könnte, der diesen schädigt. Es verbleibt eine geringe Rest-Vorspannung am Ende der Phase 2, die hier negativ ist. Durch die Gefügeumwandlung ändert sich auch der Wärmeausdehnungskoeffizient α_{T} des Betons, mit der Folge, dass die Wärmeausdehnungskoeffizienten α_{T} des Betons und der Bewehrung gegen einander laufen und am Ende der Phase 2 nahe bei einander liegen. Das meiste Wasser ist hydratisiert, der Beton ist bereits recht hart. Spannungsfelder im Beton werden durch Kriechen abgebaut.

In Phase 3 (von t₄ bis t₅) wird das Betonwerkstück weiter von der Vortemperatur auf die erhöhte Temperatur erwärmt, vorzugsweise mit ca. 0,4 ⁰C/min, bis auf 300 ⁰C. Die Vorspannung nimmt entsprechend wieder zu. Im Beton werden dabei zwar Spannungsfelder erzeugt, er bleibt jedoch im Wesentlichen oder ganz frei von Rissen, so dass der spätere Einsatz des Betonwerkstücks nicht behindert wird.

In Phase 4 (von t₅ bis t₆) wird das Betonwerkstück auf der erhöhten Temperatur weiter hydratisiert, hier während 12 Stunden. Es findet eine weitere, mit einer entsprechenden Volumenreduktion verbundene Gefügeumwandlung statt, der Wärmeausdehnungskoeffizient α_{T} des Betons fällt unter denjenigen der Bewehrung. Kriechen findet im Beton (und auch in der Bewehrung) statt, die Spannungsfelder werden abgebaut. Die Vorspannung fällt wiederum auf einen geringen, für den Beton unschädlichen Wert. Das durch die Volumenreduktion gegebene Schwinden baut die Vorspannung wiederum ab.

In Phase 5 (von t₆ bis t₇) wird das Betonwerkstück auf Umgebungstemperatur abgekühlt, vorzugsweise mit ca. 0,6 ⁰C/min. Auf Grund des höheren Wärmedehnungskoeffizienten α_{T} der Bewehrung kommt es zu einer erheblichen Vorspannung im Beton, welche sich zur in Phase 4 vorhandenen Vorspannung addiert. Damit ist das Betonwerkstück erfindungsgemäss vorgespannt, wobei, wie erwähnt, der konkrete Wert der im Beton herrschenden Druckspannungen von den im konkreten Fall durch den Fachmann gewählten Querschnitten des Betons und der Bewehrung abhängt. In der vorliegenden Probe (s. Figur 4, Kurve 26) mit dem Betonquerschnitt von 40 × 40 mm und zwei Bewehrungsstäben von je 8 mm Durchmesser beträgt die Vorspannung 30 MPa.

Mit dem oben angegebenen Beton und einer Bewehrung aus B450C Stahl mit einer Zugfestigkeit: >540 MPa sind in einem Versuch die folgenden Werte erzielt worden:

| **Zeitpunkt** | **Kriechen UHPC** | **Krlechkoeffzient von Stahl** | **α_{T} Stahl (×10⁻⁶)** | **α_{T} UHPC (×10⁻⁶)** | **Druckfestigkeit UHPC (MPa)** | **Biegezug-festigkeit Betonwerkstück (MPa)** |
|---|---|---|---|---|---|---|
| t₁ | - | 0.2 | 11.4 | - | - | - |
| t₂ | 0.5 | 0.2 | 11.4 | 16.0 | 80 | 70 |
| t₃ | 0.5 | 0.23 | 11.2 | 12.5 | 95 | 80 |
| t₄ | 0.2 | 0.23 | 11.2 | 12 | 200 | 175 |
| t₅ | 0.1 | 0.3 | 12.6 | 10.5 | 240 | 180 |
| t₆ | 0.1 | 0.3 | 12.6 | 10.5 | 300 | 190 |
| t₇ | 0.1 | 0.2 | 11.4 | 10.5 | 370 | 220 |

Aus der Tabelle geht hervor, dass auch die Bewehrung durch die Wärmebehandlung betroffen ist. Der Fachmann kann für den konkreten Fall neben den Querschnitten auch die Eigenschaften des Betons und der Bewehrung durch die Wahl der Materialien auf einander abstimmen, so dass die gewünschte Vorspannung resultiert.

Zusammenfassend wird gemäß der Erfindung der Frischbeton derart eingestellt bzw. dessen Materialien derart in Art und Menge ausgewählt, dass sein Temperaturausdehnungskoeffizient α_{T} wenigstens während einer ersten Phase der Erwärmung grösser ist als derjenige der Bewehrung, was schon während der Erwärmung zu einer ersten Vorspannung führt, welche den negativen Effekt des Schwindens des hydratisierenden Betons ausgleicht und zudem zusammen mit der während der Abkühlung erzielten Vorspannung zu einer "doppelten" Vorspannung führen kann. Dann ist der Frischbeton weiter derart eingestellt, dass sein Temperaturausdehnungskoeffizient durch die Erwärmung, vorzugsweise im Bereich der erhöhten Temperatur, kleiner wird.

Weiter ist gemäß der Erfindung der Frischbeton quarzsandbasiert und weist bevorzugt Silica - Staub auf, wodurch er einen grösseren Temperaturkoeffizienten als die (hier: Stah)Bewehrung aufweist, der aber bei der späteren Wärmebehandlung durch die Gefügeänderung kleiner wird. Besonders bevorzugt ist der quarzsandbasierte Beton faserverstärkt, was zu einer noch besseren Biegezugfestigkeit führt, s. dazu die Beschreibung unten. Hier sei angemerkt, dass angesichts der grossen Vielfalt der Materialien im Bereich der Betonherstellung der oben genannte quarzsandbasierte Frischbeton für den erfindungsgemässen Gebrauch der Gefügeumwandlung mit der einhergehenden Reduktion des Wärmedehnungskoeffizienten besonders geeignet ist, aber durch den Fachmann auch andere, geeignete Betonmischungen verwendet werden können.

Im Ergebnis ist der Frischbeton einer bevorzugten Ausführungsform quarzsandbasiert und weist Silica-Staub, einen Verflüssiger und ein Schwindreduktionsmittel auf, wobei bevorzugt weiter Fasern, besonders bevorzugt Stahlfasern dem Frischbeton zugemischt werden, und wobei ganz besonders bevorzugt die Bewehrung Stahlelemente aufweist, welche für einen Formschluss mit dem hydratisierten Beton ausgebildet sind.

Durch die Zumischung von Fasern zum Frischbeton, d.h. durch die Verwendung eines UHCP Betons für die Herstellung eines erfindungsgemässen, vorgespannten Betonwerkstücks ergibt sich eine Synergie: erfindungsgemäss ist dann nicht nur 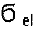 (Stufe I von Figur 1) höher, sondern auch die Differenz zwischen 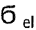 und 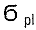 (Stufe II von Figur 1) mit dem Vorteil, dass die Grenze bis zum Versagen eines erfindungsgemässen vorgespannten Betonwerkstücks nicht nur durch die höhere elastische Verformbarkeit, sondern auch durch die ebenfalls höhere plastische Verformbarkeit relevant erhöht worden ist. Dies, weil neben der durch die Fasern vorerst gestoppten Rissbildung in Stufe II nach wie vor die die Vorspannung bewirkende Bewehrung weiterhin Zug aufnimmt, so dass die Rissbildung nach den Erkenntnissen der Anmelderin erst bei noch höherer Zugspannung durch die Fasern nicht mehr gehemmt werden kann bzw. die Fasern aus dem umgebenden Beton ausgezogen werden.

Im Hinblick auf das Temperaturprofil wird, wie erwähnt, das Betonwerkstück vor der Erwärmung auf die erhöhte Temperatur auf eine Vortemperatur erwärmt und dort hydratisiert, bevorzugt wenigstens bis zu einer Härte, bei welcher eine Relativverschiebung zwischen dem Beton und der Bewehrung auf Grund der unterschiedlichen Temperaturkoeffizienten im Temperaturbereich der gesamten weiteren Wärmebehandlung im Wesentlichen nur unter Rissbildung im Beton möglich ist. In diesem Fall kann die maximal mögliche Vorspannung realisiert werden, die mit der konkreten Betonmischung in Verbindung mit der konkreten, die Vorspannung ausübenden Bewehrung erzielbar ist.

Versuche haben gezeigt, dass bei quarzsandbasierten Betonmischungen besonders bevorzugt die Vortemperatur 70 °C oder höher ist, und weiter besonders bevorzugt zwischen 85 °C und 120 ⁰C liegt, ganz besonders bevorzugt bei 90 ⁰C, um die Parameter "fortschreitende Härte (Hydratisierung)" in Verbindung mit der "fortschreitenden Vorspannung (grösserer Wärmedehnungskoeffizient des Betons)" und "Schwinden" möglichst optimal zu kombinieren, so dass am Ende der Phase 2 das erfindungsgemässe Betonwerkstück trotz der Schwindung noch möglichst vorgespannt und für die nachfolgende Erwärmung auf die erhöhte Temperatur für die notwendige Haftung zur Bewehrung genügend hart ist.

Die erhöhte Temperatur liegt bei einer Ausführungsform zwischen im Wesentlichen 50 ⁰C und 400 ⁰C, und bevorzugt in einem Temperaturbereich zwischen 250 ⁰C und 350 °C, besonders bevorzugt im Wesentlichen bei 300 ⁰C. Unterhalb von 50 ⁰C ist die erreichbare Vorspannung gering, im Intervall bis 250 ⁰C für nicht metallische Bewehrungen günstig, da beispielsweise glasfaserverstärkte Bewehrungselemente wenig temperaturresistent sein können.

Oberhalb von 400 ⁰C können metallische, beispielsweise Stahlbewehrungen durch die Abkühlung bis gegen den Bereich der Streckgrenze gestreckt werden, so dass eine erhöhte Temperatur über 400 ⁰C kaum Sinn macht. Entsprechend ist eine erhöhte Temperatur im Bereich zwischen 250 ⁰C und 350 ⁰C insbesondere für Stahlbewehrungen bevorzugt, wobei in der Materialkombination gemäss der Beschreibung zu Figur 3 300 ⁰C besonders bevorzugt sind.

Wie oben erwähnt, wird in einer bevorzugten Ausführungsform das Betonwerkstück im Bereich der erhöhten Temperatur gehalten wird, bis innere Spannungen bevorzugt des Betons (aber auch der Bewehrung) durch Kriechen im Wesentlichen abgebaut sind.

Figur 4 zeigt ein Spannungs - Durchbiegungsdiagramm 20, wobei die Biegezugspannung 6 _{Bzug} auf der vertikalen Achse und die resultierende Dehnung ε auf der horizontalen Achse abgetragen ist. Die Kurven 21 bis 26 zeigen das Biegezugverhalten von sechs verschiedenen Proben, alle mit den gleichen Abmessungen von 40 × 40 × 160 mm im 3-Punkte Biegezugversuch.

Die Kurven 21 bis 23 betreffen Proben ohne erfindungsgemässe Vorspannung, d.h. ohne die erfindungsgemäss Vorspannung erzeugende Bewehrung, die Kurven 24 bis 26 mit einer Bewehrung aus B450C Stahl (Zugfestigkeit > 540 MPa) in der Form von zwei Zugstangen mit einem Durchmesser von 8 mm, welche an der Oberfläche die üblichen Rippen aufweisen und längs verlaufend in der Probe angeordnet sind, parallel nebeneinander und zum Boden der Probe verlaufend, so dass ihre Oberseite auf ca. einem Drittel der Höhe der Probe liegt und zwischen ihnen etwa ein Drittel der Probenbreite verbleibt.

Im Überblick sind die Proben wie folgt hergestellt worden:

| Kurve | Bewehrung für Vorspannung | Material | Wärmebehandlung |
|---|---|---|---|
| 21 | keine | UHPC | keine |
| 22 | keine | UHPC | 90 ⁰C - 72 h |
| 23 | keine | UHPC | 90 ⁰C - 72 h + 300 ⁰C - 12 h |
| 24 | 2 Stäbe Durchmesser 8 mm | UHPC | keine |
| 25 | 2 Stäbe Durchmesser 8 mm | UHPC | 90 ⁰C - 72 h |
| 26 | 2 Stäbe Durchmesser 8 mm | UHPC | 90 ⁰C - 72 h + 300 ⁰C - 12 h |

Dabei ist ersichtlich, dass nur eine Wärmebehandlung von UHPC Beton (d.h. faserverstärktem Beton) ohne die erfindungsgemässe Bewehrung nur einen geringen, hier vernachlässigbaren Einfluss ausübt, die maximale elastische Biegezugspannung unter 45 MPa bleibt (Kurven 21 bis 23). Mit der Bewehrung durch die beiden 8 mm Stäbe erreicht die maximale elastische Biegezugspannung nicht unerwartet beträchtlich höhere Werte von gegen 100 MPa (Kurve 24), welche durch eine Wärmebehandlung mit einer erhöhten Temperatur von 90 ⁰C auf 130 MPa (Kurve 25) und durch eine Wärmebehandlung mit einer Vortemperatur von 90 ⁰C sowie einer erhöhten Temperatur von 300 ⁰C auf ca. 190 MPa gesteigert werden kann (Kurve 26). Es sei angemerkt, dass die Tabelle zu Figur 3 die Daten zur Herstellung der Probe wiedergibt, deren Biegezugfestigkeit durch die Kurve 26 wiedergegeben ist.

Wie oben erwähnt ist dabei bemerkenswert, dass nicht nur der elastische Bereich (Stufe I in Figur 1) erfindungsgemäss markant erhöht wird, sondern auch der plastische Bereich (Stufe II in Figur 1).

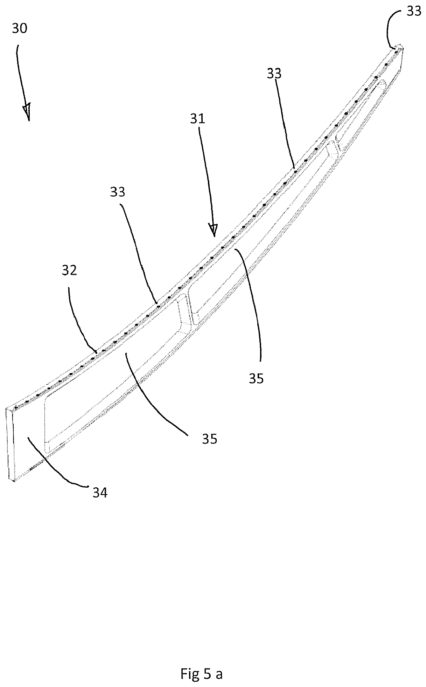

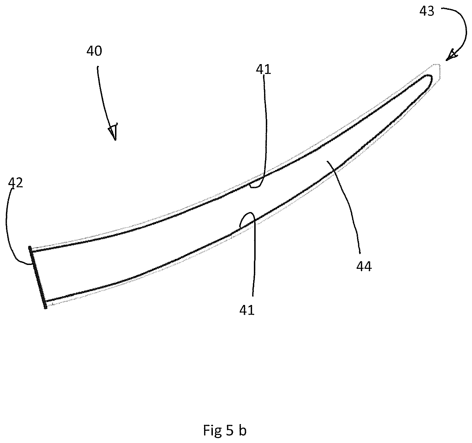

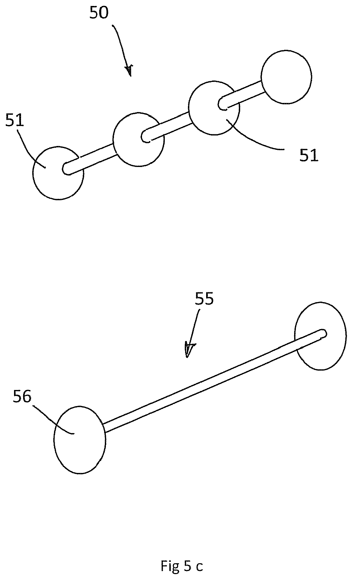

Figur 5 a zeigt einen erfindungsgmemäss hergestellten Träger 30 mit einer in diesen eingelegten, die Vorspannung erzeugenden Bewehrung 31, welche als doppelt geführter metallischer Zugstab 32 mit eingeformten Verdickungen 33 aufweist, die mit dem umgebenden Beton 34 einen Formschluss bewirken, durch welchen im Wesentlichen die notwendige Haftung zwischen der Bewehrung 31 und dem Beton 34 hergestellt ist. Der Einfachheit der Darstellung wegen ist der Beton 34 durchsichtig dargestellt, so dass die Lage und die Ausbildung der Bewehrung 31 klar ersichtlich sind. Durchbrüche 35 im Träger 30 tragen zu dessen schlanker und vor allem leichten Gestaltung bei. Die Bewehrung 31 ist voll versenkt. Dadurch ergibt sich ein durch eine versenkte Bewehrung vorgespanntes Betonwerkstück, hergestellt nach dem erfindungsgemässen Verfahren, wobei die Bewehrung vollständig in seinem Inneren liegt und seine Oberfläche rundum einstückig vergossen ist.

Figur 5 b zeigt einen weiteren erfindungsgmemäss hergestellten Träger 40 mit einer die Vorspannung erzeugenden Bewehrung 41, welche an der einen Seite des Trägers als Aussenplatte 42 ausgebildet ist, und auf der anderen Seite des Trägers als versenkter Bügel 43, so dass die Vorspannung über die Aussenplatte 42 und die Bügelform wiederum im Wesentlichen durch Formschluss auf den Beton übertragen wird. Wiederum ist der Beton 44 durchsichtig dargestellt, damit Lage und Ausbildung der Bewehrung klar ersichtlich sind. Die Aussenplatte 42 ermöglicht beispielsweise, den Träger 40 mit einer weiteren Struktur beispielsweise durch eine Verschraubung oder Verschweissung zu verbinden.

Dadurch ergibt sich ein durch eine versenkte Bewehrung vorgespanntes Betonwerkstück, hergestellt nach dem erfindungsgemässen Verfahren, wobei die Bewehrung an der Oberfläche als Zuganker ausgebildet ist, welcher am Beton abgestützt ist und bevorzugt als Verbindungselement zu einer anschliessenden Struktur ausgebildet ist. Der als Zuganker ausgebildete Abschnitt der Bewehrung ist erfindungsgemäss nicht verstellbar, sondern starr an den anderen Abschnitten der Bewehrung angeordnet, so dass er nicht der nachträglichen Vorspannung dient, welche erfindungsgemäss durch die Wärmebehandlung erzielt wird.

Die Bewehrung 31,41 sind bei den gezeigten Ausführungsformen bevorzugt metallisch ausgebildet, können aber auch aus einem nichtmetallischen Material bestehen, beispielsweise glasfaserverstärkt sein, so dass die die Vorspannung bewirkende Bewehrung wenigstens ein kohlefaserverstärktes und/oder ein glasfaserverstärktes Zugelement aufweist.

Der Fachmann kann im konkreten Fall für die notwendige Haftung mit dem Beton einen Formschluss, einen Kraftschluss oder auch einen Stoffschluss bzw. Kombinationen davon vorsehen. Beispielsweise ist es möglich, die Bewehrung mit einem Heisskleber zu versehen, der dann bevorzugt bei der erhöhten Temperatur (oder auch bei einer Vortemperatur) härtet und so eine feste Verbindung zwischen der Bewehrung und dem Beton bewirkt.

Figur 5c zeigt zwei Beispiele für eine die Vorspannung bewirkende Bewehrung in der Form von Fasern, welche dem Beton zumischbar sind, nämlich eine Faser 50 sowie eine Faser 55, die beide erfindungsgemäss keine gleichförmige Oberfläche aufweisen, sondern mit Hilfe hier von Erhebungen wie beispielsweise geeignet angeordneten Höckern 51 oder beispielsweise endseitig vorgesehenen Scheiben 56 für einen Formschluss mit dem Beton ausgebildet sind. Solche Fasern 50,55 unterscheiden sich von den konventionell im Faserbeton eingesetzten Fasern und bewirken eine Verbesserung der Biegezugfestigkeit analog zur Differenz zwischen den Kurven 21 bis 23 und den Kurven 24 bis 26 von Figur 4.

Es ergibt sich, dass in einer Ausführungsform des erfindungsgemässe Verfahrens die Bewehrung Fasern aufweist, deren Oberfläche für einen Formschluss mit dem Beton ausgebildet ist, und bevorzugt mit Höckern oder quer abstehende, rundum laufende scheibenförmige Erhebungen versehen ist. Allgemein kann der Fachmann im konkreten Fall erfindungsgemäss die Bewehrung an ihrer Oberfläche mit Erhebungen und / oder Vertiefungen versehen, derart, dass diese mit dem umgebenden, hydratisierten Beton in Richtung der Vorspannung formschlüssig verbunden sind, und wobei die Bewehrung bevorzugt Stahlelemente aufweist.

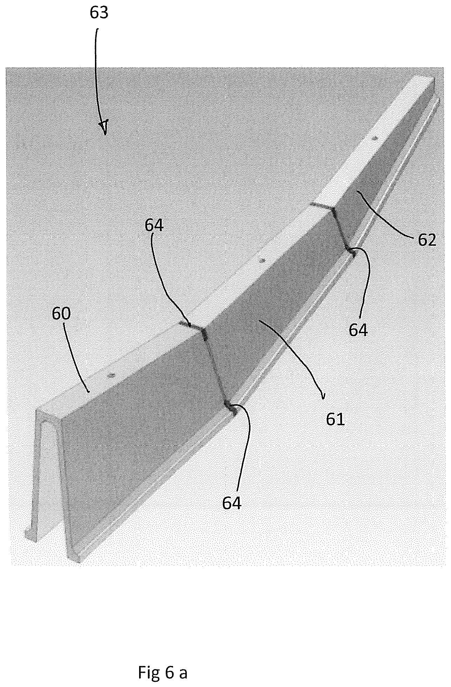

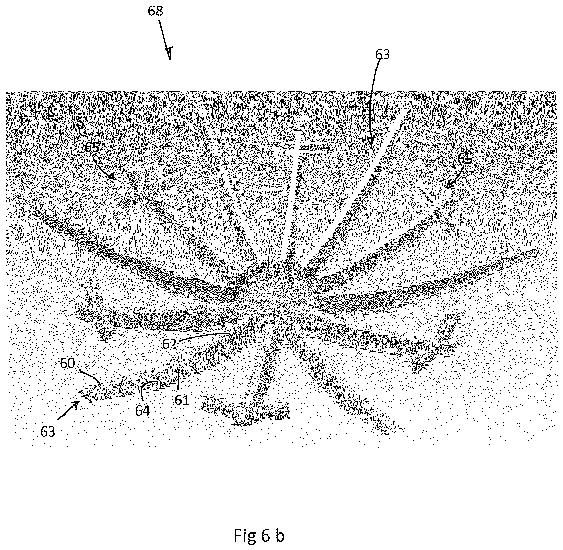

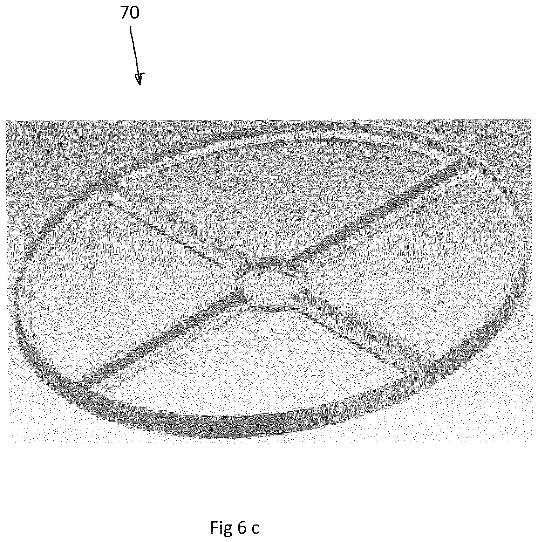

Figur 6 a zeigt beispielhaft einen aus drei erfindungsgemässen Betonwerkstücken 60 bis 62 hergestellten Trägerarm 63, wobei die Betonwerkstücke 60 bis 62 durch Ankerplatten 64 mit einander verbunden sind und wobei die die Vorspannung erzeugenden Bewehrungen zur Entlastung der Figur weggelassen sind. Der im Querschnitt u-förmige Träger ist, obschon aus Beton, hochbelastbar, dabei filigran und schliesslich billig herzustellen.

Figur 6 b zeigt beispielhaft eine Tragstruktur 68 für einen runden Sonnenkollektor (DishKollektor), der aus mit einander verbundenen, erfindungsgemässen Betonwerkstücken hergestellt ist, einmal aus Trägerarmen 61 gemäss der Figur 6a und dann aus Trägern 65, die kreuzförmig ausgebildet sind. Die Bewehrungen sind zur Entlastung der Figur weggelassen.

In allen Betonwerkstücken kann der Fachmann die Vorspannung erzeugende Bewehrung erfindungsgemäss optimal entsprechend der zu erreichenden Festigkeit der Tragstruktur konzipieren und damit eine im Vergleich zum Stand der Technik verbessert hochfeste, leichte und zugleich günstige Konstruktion realisieren.

Figur 6 c zeigt beispielhaft ein erfindungsgemässes Betonwerkstück, hier einen zentral angeordneten Ständer 70 für einen Dishkollektor, wobei die die Vorspannung erzeugenden Bewehrungen zur Entlastung der Figur nicht dargestellt sind.

Ein Vergleich mit anderen Materialien, aus denen der Ständer 70 hergestellt werden kann, zeigt:

| Material | Dichte ρ (kg/m3) | E Modul (GPa) | αT | Gewicht (kg) | Kosten (EUR) |
|---|---|---|---|---|---|
| Aluminium | 2700 | 70 | 22 × 10 ^{-6 0}/K | 7 | 130 |
| Stahl | 7850 | 210 | 12 × 10 ^{-6 0}/K | 25 | 80 |
| UHPC | 2460 | 45,6 | 11 × 10 ^{-6 0}/K | 14 | 50 |
| UHPC mit erfindungsgemässer Bewehrung | 2820 | 62,7 | 11 × 10 ^{-6 0}/K | 12 | 55 |

Damit ist ersichtlich, dass erfindungsgemäss ein Betonwerkstück, hier am Beispiel des Trägers 70, bei halben Kosten die Festigkeit einer Aluminiumkonstruktion erreichen kann, was für den Beton neue Anwendungsgebiete eröffnet.

Abschliessend sei darauf hingewiesen, dass der Fachmann die verschiedenen Ausführungsformen im Hinblick auf die Wärmebehandlung, die Ausbildung der Bewehrung und die Materialzusammensetzung frei im Hinblick auf den konkreten Fall kombinieren kann, um zu einer optimalen Gestaltung des gewünschten vorgespannten Betonwerkstücks zu gelangen.

Durch die Wärmebehandlung ist der Beton im Wesentlichen vollständig oder nahezu vollständig hydratisiert. Entsprechend verliert der Beton, und damit das Betonwerkstück bei einer Erwärmung über 100⁰ C, bevorzugt auf 105⁰ C weniger als 5 % seines Gewichts, bevorzugt weniger als 3,5% seines Gewichtes, besonders bevorzug im Wesentlichen kein Gewicht, und unterscheidet sich so von vorgespannten Betonwerkstücken konventioneller Art.

## Patentansprüche

1. Verfahren zum Herstellen eines durch eine Bewehrung vorgespannten Betonwerkstücks, bei welchem in einer Giessform die Bewehrung enthaltender, quarzsandbasierter Frischbeton bereitgestellt wird, wobei die Vorspannung durch eine Wärmebehandlung erzeugt wird, wobei der Beton und die Bewehrung dafür derart ausgewählt werden, dass bei einer Abkühlung des Betonwerkstücks aus einer erhöhten Temperatur der Wärmeausdehnungskoeffizient des Betons kleiner ist als derjenige der Bewehrung, wobei der Frischbeton weiter derart eingestellt wird, dass sein Temperaturausdehnungskoeffizient durch die Erwärmung, im Bereich der erhöhten Temperatur, von einem Wert oberhalb unter denjenigen der Bewehrung fällt, und dass während der Abkühlung der Beton und die Bewehrung genügend stark aneinander haften, wenn der Beton während der Abkühlung wenigstens soweit hydratisiert ist, um die Bewehrung auf Grund der unterschiedlichen Wärmedehnungskoeffizienten dehnen zu können, und dass der Beton mit der Bewehrung derart auf die erhöhte Temperatur gebracht und während der Abkühlung wenigstens soweit hydratisiert wird, dass er nach der Abkühlung durch die Bewehrung vorgespannt ist.

2. Verfahren nach Anspruch 1, wobei die Oberfläche der Bewehrung geometrisch derart ausgebildet ist, dass mit dem umgebenden, wenigstens teilweise hydratisierten Beton in Richtung der Vorspannung ein Formschluss entsteht.

3. Verfahren nach Anspruch 1, wobei die Oberfläche der Bewehrung derart ausgebildet ist, dass mit dem umgebenden, wenigstens teilweise hydratisierten Beton in Richtung der Vorspannung ein Kraftschluss entsteht.

4. Verfahren nach Anspruch 1, wobei die Oberfläche der Bewehrung derart ausgebildet ist, dass mit dem umgebenden, wenigstens teilweise hydratisierten Beton in Richtung der Vorspannung ein Stoffschluss entsteht, bevorzugt durch eine Schicht eines Heissklebers, der durch die Temperatureinwirkung der erhöhten Temperatur härtet.

6. Verfahren nach Anspruch 5, wobei der Frischbeton derart eingestellt wird, dass sein Temperaturausdehnungskoeffizient wenigstens während einer ersten Phase der Erwärmung grösser ist als derjenige der Bewehrung.

7. Verfahren nach Anspruch 1 oder 5, wobei der Frischbeton Silica - Staub aufweist, bevorzugt eine faserverstärkte Betonmischung ist.

8. Verfahren nach Anspruch 4, wobei der Frischbeton Silica Staub, einen Verflüssiger und ein Schwindreduktionsmittel aufweist, und wobei bevorzugt weiter Fasern, besonders bevorzugt Stahlfasern dem Frischbeton zugemischt werden, und wobei ganz besonders bevorzugt die Bewehrung Stahlelemente aufweist, welche für einen Formschluss mit dem hydratisierten Beton ausgebildet sind.

9. Verfahren nach Anspruch 1, wobei der Frischbeton für die Erwärmung auf die erhöhte Temperatur und für die Abkühlung aus dieser denselben Wärmeausdehnungskoeffizienten aufweist, wobei die Hydratisation des Betons für die Erwärmung tief genug gehalten wird, um eine Relativverschiebung zwischen dem Frischbeton und der Bewehrung zu erlauben, und wobei die Abkühlung mit einer Hydratisierung erfolgt, welche eine solche Relativverschiebung nicht mehr zulässt, derart, dass der Beton durch die Abkühlung vorgespannt wird.

10. Verfahren nach Anspruch 1, wobei das frisch vergossene Betonwerkstück vor der Erwärmung auf die erhöhte Temperatur für eine erste Formfestigkeit teilweise hydratisiert wird, bis der Beton bevorzugt eine Härte zwischen 20 MPa und 60 MPa aufweist, wobei besonders bevorzugt diese teilweise Hydratisierung bei Umgebungstemperatur erfolgt.

11. Verfahren nach Anspruch 1, wobei das Betonwerkstück vor der Erwärmung auf die erhöhte Temperatur auf eine Vortemperatur erwärmt und dort hydratisiert wird, bevorzugt wenigstens bis zu einer Härte, bei welcher eine Relativverschiebung zwischen dem Beton und der Bewehrung auf Grund der unterschiedlichen Temperaturkoeffizienten im Temperaturbereich der gesamten weiteren Wärmebehandlung im Wesentlichen nur unter Rissbildung im Beton möglich ist, wobei besonders bevorzugt die Vortemperatur 70 ⁰C oder höher ist, und weiter besonders bevorzugt zwischen 85 ⁰C und 120 ⁰C liegt, ganz besonders bevorzugt bei 90 ⁰C.

12. Verfahren nach Anspruch 1, wobei die erhöhte Temperatur in zwischen im Wesentlichen 70 ⁰C und 400 ⁰C, und bevorzugt in einem Temperaturbereich zwischen 250 ⁰C und 350 ⁰C, besonders bevorzugt im Wesentlichen bei 300 ⁰C liegt.

13. Verfahren nach Anspruch 1, wobei das Betonwerkstück im Bereich der erhöhten Temperatur gehalten wird, bis innere Spannungen bevorzugt des Betons durch Kriechen im Wesentlichen abgebaut sind

14. Verfahren nach Anspruch 1, wobei die Erwärmung 0,2 ⁰C /min und/oder die Abkühlung 0,2 - 0,4 ⁰C /min beträgt.

15. Verfahren nach Anspruch 1, wobei die Bewehrung an ihrer Oberfläche mit Erhebungen und / oder Vertiefungen versehen ist, derart, dass diese mit dem umgebenden, hydratisierten Beton in Richtung der Vorspannung formschlüssig verbunden sind, und wobei die Bewehrung bevorzugt Stahlelemente aufweist.

16. Verfahren nach Anspruch 1, wobei die Bewehrung wenigstens ein kohlefaserverstärktes und/oder ein glasfaserverstärktes Zugelement aufweist.

17. Verfahren nach Anspruch 1, wobei die Bewehrung Fasern aufweist, deren Oberfläche für einen Formschluss mit dem Beton ausgebildet ist, und bevorzugt mit Höckern oder quer abstehende, rundum laufende scheibenförmige Erhebungen versehen ist.

## Claims

1. A method for manufacturing a concrete workpiece prestressed by a reinforcement, in which the quartz sand-based fresh concrete that contains the reinforcement is provided in a casting mold, wherein the prestress is generated by a thermal treatment, wherein the concrete and its reinforcement are selected in such a way that the thermal expansion coefficient of the concrete is smaller than that of the reinforcement while cooling the concrete workpiece from an elevated temperature, wherein the fresh concrete is further set in such a way that its thermal expansion coefficient drops from a value above to below that of the reinforcement as a result of heating in the elevated temperature range, and that the concrete and reinforcement adhere to each other strongly enough in the cooling process when the concrete has been hydrated in the cooling process to at least an extent where the reinforcement can be expanded owing to the varying thermal expansion coefficients, and that the concrete with the reinforcement is brought to the elevated temperature in such a way and hydrated in the cooling process to at least an extent that it is prestressed by the reinforcement after cooling.

2. The method according to claim 1, wherein the surface of the reinforcement is geometrically designed in such a way that a positive connection arises with the surrounding, at least partially hydrated concrete in the direction of the prestress.

3. The method according to claim 1, wherein the surface of the reinforcement is designed in such a way that a frictional connection arises with the surrounding, at least partially hydrated concrete in the direction of the prestress.

4. The method according to claim 1, wherein the surface of the reinforcement is designed in such a way that an integral connection arises with the surrounding, at least partially hydrated concrete in the direction of the prestress, preferably in the form of a hot-melt adhesive layer, which is cured through exposure to the elevated temperature.

5. The method according to claim 4, wherein the fresh concrete is set in such a way that its thermal expansion coefficient is larger than that of the reinforcement at least during a first phase of heating.

6. The method according to claim 1 or 5, wherein the fresh concrete exhibits silica dust, and preferably is a fiber-reinforced concrete mixture.

7. The method according to claim 4, wherein the fresh concrete exhibits silica dust, a liquefier, and a shrinkage reduction agent, and wherein preferably fibers, especially preferably steel fibers, are added to the fresh concrete, and wherein the reinforcement very especially preferably exhibits steel elements designed for positive connection with the hydrated concrete.

8. The method according to claim 1, wherein the fresh concrete exhibits the same thermal expansion coefficient for heating to the elevated temperature and for cooling back down from the latter, wherein concrete hydration for heating is kept low enough to permit a relative displacement between the fresh concrete and reinforcement, and wherein cooling takes place with hydration that no longer allows such a relative displacement, so that cooling prestresses the concrete.

9. The method according to claim 1, wherein the freshly poured concrete workpiece is partially hydrated before heated to the elevated temperature for a first dimensional stability, until the concrete preferably exhibits a hardness of between 20 MPa and 60 MPa, wherein this partial hydration especially preferably takes place at an ambient temperature.

10. The method according to claim 1, wherein the concrete workpiece is heated to an initial temperature prior to being heated to the elevated temperature and there hydrated, preferably at least to a hardness at which a relative displacement between the concrete and reinforcement due to the varying temperature coefficients in the temperature range of the entire continued thermal treatment is essentially only possible given crack formation in the concrete, wherein the initial temperature is especially preferably 70 °C or higher, and further especially preferably lies between 85 °C and 120 °C, very especially preferably at 90 °C.

11. The method according to claim 1, wherein the elevated temperature lies between essentially 70 °C and 400 °C, and preferably in a temperature range of between 250 °C and 350 °C, especially preferably at essentially 300 °C.

12. The method according to claim 1, wherein the concrete workpiece is kept in the elevated temperature region until inner stresses preferably of the concrete have been essentially degraded by creep.

13. The method according to claim 1, wherein the heating measures 0.2 and/or cooling measures 0.2 - 0.4 °C/min.

14. The method according to claim 1, wherein the surface of the reinforcement is provided with elevations and/or depressions, so that the latter are positively connected with the surrounding, hydrated concrete in the direction of prestress, and wherein the reinforcement preferably exhibits steel elements.

15. The method according to claim 1, wherein the reinforcement exhibits at least one carbon fiber-reinforced and/or a glass fiber-reinforced tensile element.

16. The method according to claim 1, wherein the reinforcement exhibits fibers whose surface is designed to establish a positive connection with the concrete, and preferably is provided with bumps or transversely protruding, disk-like elevations running all around.

17. The

## Revendications

1. Procédé de fabrication d'un ouvrage en béton précontraint par une armature, pour lequel du béton frais contenant l'armature, à base de quartz sable siliceux est préparé dans un moule de coulage, sachant que la précontrainte est générée par un traitement thermique, sachant que le béton et l'armature sont choisis à cet effet de telle manière que lors d'un refroidissement de l'ouvrage en béton à partir d'une température élevée, le coefficient de dilatation thermique du béton est plus petit que celui de l'armature, sachant que le béton frais est en plus mis au point de telle manière que son coefficient de dilatation thermique tombe par le réchauffement dans la zone de la température élevée, d'une valeur au-dessus, en dessous de celle de l'armature et que pendant le refroidissement, le béton et l'armature adhèrent suffisamment fortement l'un à l'autre, lorsque le béton est pendant le refroidissement au moins assez hydraté pour pouvoir dilater l'armature en raison des coefficients de dilatation thermique différents et que le béton est ainsi porté avec l'armature à la température élevée et hydraté pendant le refroidissement au moins de telle façon qu'il est précontraint par l'armature après le refroidissement.

2. Procédé selon la revendication 1, sachant que la surface de l'armature est constituée géométriquement de telle manière qu'il se crée une conformité de forme en direction de la précontrainte avec le béton environnant, au moins en partie hydraté.

3. Procédé selon la revendication 1, sachant que la surface de l'armature est constituée de telle sorte qu'il se crée une conformité de force en direction de la précontrainte avec le béton environnant au moins en partie hydraté.

4. Procédé selon la revendication 1, sachant que la surface de l'armature est constituée de telle sorte qu'il se crée une conformité de matière en direction de la précontrainte avec le béton environnant au moins en partie hydraté, de préférence par une couche d'un thermocollant qui durcit sous l'effet thermique de la température élevée.

5. Procédé selon la revendication 4, sachant que le béton frais est mis au point de telle manière que son coefficient de dilatation thermique au moins pendant une première phase du réchauffement est supérieur à celui de l'armature.

6. Procédé selon la revendication 1 ou 5, sachant que le béton frais comporte de la poussière siliceuse, de préférence un mélange de béton renforcé par des fibres.

7. Procédé selon la revendication 4, sachant que le béton frais comporte de la poussière siliceuse, un liquéfacteur et un agent réducteur de retrait et sachant de préférence en plus que des fibres, en particulier des fibres d'acier sont mélangées au béton frais et sachant tout particulièrement de préférence que l'armature comporte des éléments d'acier, lesquels sont constitués pour une conformité de forme avec le béton hydraté.

8. Procédé selon la revendication 1, sachant que le béton frais comporte pour le réchauffement à la température élevée et pour le refroidissement à partir de celle-ci, le même coefficient de dilatation thermique, sachant que l'hydratation du béton est maintenue suffisamment basse pour le réchauffement pour permettre un décalage relatif entre le béton frais et l'armature et sachant que le refroidissement a lieu avec une hydratation, laquelle n'admet plus un tel décalage relatif de telle manière que le béton est précontraint par le refroidissement.

9. Procédé selon la revendication 1, sachant que l'ouvrage en béton fraîchement coulé est hydraté en partie avant le réchauffement à la température élevée pour une première stabilité de forme jusqu'à ce que le béton comporte de préférence une dureté se situant entre 20 MPa et 60 MPa, sachant de préférence en particulier que cette hydratation partielle a lieu à température ambiante.

10. Procédé selon la revendication 1, sachant que l'ouvrage en béton est réchauffé à une température préliminaire avant le réchauffement à la température élevée et y est hydraté, de préférence au moins jusqu'à une dureté à laquelle un décalage relatif entre le béton et l'armature n'est pour l'essentiel possible qu'avec une fissuration dans le béton en raison des coefficients thermiques différents dans la gamme de températures de tout le traitement thermique ultérieur, sachant en particulier de préférence que la température préliminaire est de 70° C ou plus élevée et en particulier de préférence en plus se situe entre 85° C et 120° C, de façon tout particulièrement préférée à 90°C.

11. Procédé selon la revendication 1, sachant que la température élevée se situe pour l'essentiel entre 70° C et 400 °C et de préférence dans une gamme de températures située entre 250° C et 350° C, en particulier de préférence pour l'essentiel à 300° C.

12. Procédé selon la revendication 1, sachant que l'ouvrage en béton est maintenu dans la gamme de la température élevée jusqu'à ce que des tensions intérieures de préférence du béton soient pour l'essentiel supprimées par fluage.

13. Procédé selon la revendication 1, sachant que le réchauffement est de 0,2° C/min et/ou le refroidissement est de 0,2 - 0,4° C/min.

14. Procédé selon la revendication 1, sachant que l'armature est dotée sur sa surface d'élévations et/ou de cavités de telle sorte que celles-ci sont reliées par conformité de forme au béton environnant, hydraté en direction de la précontrainte et sachant que l'armature comporte de préférence des éléments en acier.

15. Procédé selon la revendication 1, sachant que l'armature comporte au moins un élément de traction renforcé par des fibres de carbone et/ou renforcé par des fibres de verre.

16. Procédé selon la revendication 1, sachant que l'armature comporte des fibres, dont la surface est constituée pour une conformité de forme avec le béton et est dotée de préférence de bosses ou d'élévations en forme de disques faisant saillie transversalement passant tout autour.

17. Procédé
